# EUROPÄISCHE PATENTSCHRIFT

(11) **EP 4 310 610 B1**
(45) Veröffentlichungstag und Bekanntmachung des Hinweises auf die Patenterteilung: **15.04.2026**
(21) Anmeldenummer: 23185588.3
(22) Anmeldetag: 14.07.2023
(51) Int. Cl.: G05B 19/406, B25J 9/16

(54) **VERFAHREN ZUR ÜBERWACHUNG EINES VERSCHLIESSERS**
METHOD FOR MONITORING A CLOSING DEVICE
PROCÉDÉ DE SURVEILLANCE D'UN DISPOSITIF DE FERMETURE

(30) Priorität: 19.07.2022 EP 22185612
(43) Veröffentlichungstag der Anmeldung: 24.01.2024
(73) Patentinhaber: Ferrum Packaging AG, 5503 Schafisheim (CH)
(72) Erfinder: Bühler, Oliver, 4556 Aeschi (CH); Rohr, Gerhard, 5033 Buchs (CH)
(74) Vertreter: IPS Irsch AG

(56) Entgegenhaltungen:
- EP-B1- 2 217 392
- US-B2- 11 007 562

## Beschreibung

Die Erfindung betrifft ein Verfahren zur Überwachung von Falzwerkzeugen eines Verschliessers. Die Erfindung betrifft weiter einen Verschliesser zur Durchführung des erfindungsgemässen Verfahrens.

Bei der Abfüllung von Getränkedosen oder Lebensmitteldosen durchlaufen die Dosen nach der Befüllung mit dem Getränk oder dem Lebensmittel einen Dosenverschliesser, wobei die befüllten Dosen über einen Zuführweg einlaufen und über einen weiteren Zuführweg Dosendeckel einlaufen. Der Dosenverschliesser weist üblicherweise mehrere karussellförmig angeordnete gleichartige Anordnungen auf, in denen jeweils eine Dose mit einem Dosendeckel verschlossen wird. Die Dosendeckel werden dabei auf die Dosen geführt und mit einem Falzkopf auf der Dose gehalten. Dieses Halten dient auch der Fixierung der Dosen gegen ein Ausbrechen aus der von den Dosen in dem Dosenverschliesser durchlaufenen Kreisbahn aufgrund der Zentrifugalkraft. In dem Dosenverschliesser wird dabei die Dose mit dem Dosendeckel randseitig über eine Falzrolle gefalzt und somit verschlossen. In der Regel wird die Dose mit dem Dosendeckel dabei mittels des Falzkopfes zusätzlich um die eigene Symmetrieachse rotiert. Zur Rotation sind die Falzrollen und Falzköpfe an einer jeweiligen Falzwelle beziehungsweise Falzrollenbolzen angeordnet.

Ein gattungsgemässer Dosenverschliesser wird in der DE 749636 und der DE4234115 A1 beschrieben. Der Dosenverschliesser umfasst eine Einspannvorrichtung zur Aufnahme einer zu verschliessenden Dose. Im Betriebszustand ist die zu verschliessende Dose in die Einspannvorrichtung eingebracht und durch diese in axialer und radialer Richtung gesichert. Ebenso ist ein Dosendeckel über der Dosenöffnung der zu verschliessenden Dose zentriert eingebracht. Die Dose weist im Bereich der Dosenöffnung einen umlaufenden Dosenflansch und der Dosendeckel einen umlaufenden Dosendeckelflansch auf. Zum Verschliessen der Dosenöffnung durch den Dosendeckel umfasst der Dosenverschliesser zusätzlich zwei um jeweils eine Achse drehbar gelagerte Falzrollen, die den Dosenflansch und den Dosendeckelflansch mittels einer im wesentlichen radial wirkenden Kraft miteinander verpressen, wobei die Verpressung durch ein kontinuierliches Abrollen in Umfangsrichtung entlang dem Umfang der Dosenöffnung erfolgt.

Ein weiterer Dosenverschliesser ist aus der GB 2098899 A bekannt. Der Dosenverschliesser umfasst eine Einspannvorrichtung zur Aufnahme der zu verschliessenden Dose und eine Falzrolle. Im Betriebszustand ist die zu verschliessende Dose in die Einspannvorrichtung eingebracht und durch diese in axialer und radialer Richtung gesichert. Ebenso ist ein Dosendeckel über der Dosenöffnung der zu verschliessenden Dose zentriert eingebracht. Die Dose weist im Bereich der Dosenöffnung des Dosenkörpers einen umlaufenden Dosenflansch und der Dosendeckel einen umlaufenden Dosendeckelflansch auf.

Die EP 2 217 392 B1 zeigt ein Verfahren zur Überwachung eines Verschliessers.

Die US 11,007,562 B2 zeigt ein Verfahren zur Überwachung von Werkzeugen in einem Herstellungsprozess für Dosen.

Zum Verschliessen der Dosen werden also Falzwerkzeuge benötigt, welche unter anderem die vorangehend erwähnten Falzrollen und Falzköpfe umfassen. Diese Falzwerkzeuge verformen das Metall von Dose und Deckel und unterliegen daher einem durch Druck und Reibung verursachten Verschleiss. Die Falzwerkzeuge müssen daher von Zeit zu Zeit ersetzt werden. Ein wichtiges Qualitätsmerkmal von Falzrollen ist die Anzahl der vom Hersteller garantierten Dosen, die mit dieser Falzrolle verschlossen werden können.

Wenn man die Daten ordentlich aufzeichnet, lassen sich die Anzahl der verschlossenen Dosen einer Falzrolle grob ermitteln und der Verschleiss der Falzwerkzeuge grob überwachen. Dazu sind aber händische Aufzeichnungen durch den Anwender nötig.

Es gibt also keine verlässliche Methode, den Verschleiss von Falzwerkzeugen zu überwachen.

Aufgabe der Erfindung ist es daher, ein Verfahren zur Überwachung von Falzwerkzeugen eines Verschliessers und einen Verschliesser bereitzustellen, welche die aus dem Stand der Technik bekannten nachteiligen Wirkungen vermeiden. Insbesondere soll es ermöglicht werden, den Verschleiss von Falzwerkzeugen eines Verschliessers genau und zuverlässig zu überwachen.

Die Aufgabe wird durch ein erfindungsgemässes Verfahren zur Überwachung von Falzwerkzeugen eines Verschliessers und einen Verschliesser zur Durchführung des erfindungsgemässen Verfahrens gelöst.

Erfindungsgemäss wird Verfahren zur Überwachung von Falzwerkzeugen eines Verschliessers vorgeschlagen. Das erfindungsgemässe Verfahren umfasst das Bereitstellen eines Verschliessers mit einem Falzwerkzeug (oder auch mehreren Falzwerkzeugen) zum Befestigen eines Deckels an einem Behälter sowie einer Steuervorrichtung zur Steuerung und Überwachung des Verschliessers, wobei das Falzwerkzeug ein Identifikationselement umfasst, durch welches das Falzwerkzeug eindeutig identifizierbar (also insbesondere von allen anderen Falzwerkzeugen unterscheidbar) ist. Ausserdem umfasst das erfindungsgemässe Verfahren das Identifizieren des Falzwerkzeuges mittels des Identifikationselementes und das Hinterlegen der Identifikation (auch Identifizierung) des Falzwerkzeuges in der Steuervorrichtung sowie das Überwachen einer Anzahl von mittels des Falzwerkzeuges verschlossenen Behältern durch die in der Steuervorrichtung hinterlegte Identifikation.

Das erfindungsgemässe Verfahren ermöglicht es dem (insbesondere jedem) Falzwerkzeug in der Steuerung die Anzahl der damit verschlossenen Behälter zuzuordnen. Dazu kann das (insbesondere jedes) Falzwerkzeug durch das Identifikationselement maschinenlesbar markiert werden. Vor einem Anlaufen des Verschliessers für die Produktion können alle bei einer Initialisierung eingebauten Falzwerkzeuge identifiziert und in der Steuerung also der Steuervorrichtung hinterlegt werden. Für das (insbesondere jedes) Falzwerkzeug kann also ein Zähler hinterlegt werden.

Erfindungsgemäß umfasst der Verschliesser ein Identifikationsgerät, welches zu dem Identifikationselement bewegt wird und das Falzwerkzeug mittels des Identifikationselements identifiziert.

Dabei kann das Identifikationselement ein Transponder sein. Insbesondere kann der Transponder ein passiver Transponder sein und das Identifikationsgerät als eine Sende-/Empfangseinheit ausgestaltet sein und zur Identifikation Energie an den passiven Transponder bereitstellen.

Alternativ oder zusätzlich kann das Identifikationselement ein optoelektronisch lesbares Identifikationselement sein. Dabei kann das Identifikationsgerät ein optoelektronisches Lesegerät sein und zur Identifikation das optoelektronisch lesbare Identifikationselement auslesen. Bevorzugt kann das optoelektronisch lesbare Identifikationselement ein Strichcode oder ein QR-Code sein. Als Strichcode oder auch Barcode kann dabei eine optoelektronisch lesbare Schrift verstanden werden, die aus verschieden breiten, parallelen Strichen und Lücken besteht. Der Begriff Code steht hierbei für Abbildung von Daten in binären Symbolen.

Jedes Falzwerkzeug kann an der gleichen Stelle eines Stators (also eines im Betriebszustand / beim Verschliessen des Behälters statischer / unbeweglicher Teil des Falzwerkezeuges) den Transponder / das Identifikationselement aufweisen. Da in einem Arbeitsraum des Verschliessers erhöhte hygienische Anforderungen erfüllt werden sollen, kann das Identifikationsgeräte in einem Oberteil des Verschliessers versenkt sein und nur in den Arbeitsraum hineinfahren, wenn die Identifizierung der Falzwerkzeuge durchgeführt wird. Das Identifikationsgerät kann also derart an dem Verschliesser angeordnet sein, dass es in den Arbeitsraum einbringbar ist.

In Ausführung der Erfindung kann in der Steuervorrichtung ein Grenzwert für verschlossene Behälter hinterlegt werden und nach dem Erreichen des Grenzwertes für das Falzwerkzeug ein Abnutzungssignal über die Steuervorrichtung ausgegeben wird. Dieses Abnutzungssignal kann entweder den Benutzer informieren und / oder den Verschliesser stoppen, um so einen rechtzeitigen Austausch / eine rechtzeitige Überprüfung der Falzwerkzeuge zu ermöglichen.

Das Falzwerkzeug kann eine um eine Falzachse rotierbare Falzwelle und ein an einem Ende der Falzwelle angeordnetes Falzmittel umfassen. Dabei kann das Falzmittel abnehmbar an einem Ende der Falzwelle angeordnet sein. Besonders bevorzugt bezieht sich das erfindungsgemässe Verfahren dabei auf das Falzmittel, d.h. durch das Identifikationselement ist das Falzmittel eindeutig identifizierbar, also das Falzmittel wird durch das Identifikationselementes identifiziert und die Identifikation des Falzmittels wird in der Steuervorrichtung hinterlegt, sodass die Anzahl von mittels des Falzmittels verschlossenen Behältern durch die in der Steuervorrichtung hinterlegte Identifikation überwacht werden kann.

Das Überwachen der Anzahl von mittels des Falzwerkzeuges verschlossenen Behältern kann durch eine Rotationsmessung an der Falzwelle erfolgen. Das Identifikationsgerät kann hierfür als ein zur Messung an der Falzwelle angeordneter Rotationssensor wie ein Gyrometer ausgestaltet sein. Alternativ können jedoch auch die Rotationen des Rotors gezählt werden (bei jeder Umdrehung des Rotors wird eine Dose pro Station verschlossen).

Die Falzwelle kann eine Falzkopfwelle und das Falzmittel ein Falzkopf zum Fixieren des Deckels auf dem Behälter sein. Alternativ oder zusätzlich kann die Falzwelle eine Falzrollenwelle (auch Falzrollenbolzen) und das Falzmittel eine Falzrolle zum Falzen des Deckels an den Behälter sein.

Jede Falzrolle kann an der gleichen Stelle des Stators den Transponder aufweisen. Da im Arbeitsraum erhöhte hygienische Anforderungen erfüllt werden sollen, ist das Identifikationsgerät vorzugsweise bewegbar und im Oberteil des Verschliessers derart versenkt, dass es in den Produktraum hineingefahren werden kann, wenn die Identifizierung der Falzrollen durchgeführt wird.

Vorzugsweise kann für die Identifizierung nur der Rotor (als Bewegungsvorrichtung einer karussellförmigen Anordnung) des Verschliessers rotiert werden, so dass keine Behälter für die Identifizierung verschwendet werden (d.h. die restlichen Vorrichtungsteile des Verschliessers stehen still). Der Rotor des Verschliessers kann also "leer" bewegt werden. Nach erfolgter Identifizierung kann mit dem Verschliessen begonnenen werden, während das Identifikationsgerät noch aus dem Arbeitsraumraum heraus gefahren / in das Oberteil hineingefahren wird.

In einer besonders bevorzugten Ausführung der Erfindung kann das Überwachen der Anzahl von mittels des Falzwerkzeuges verschlossenen Behältern über ein Zählen der Deckel durch eine Deckelabstapelung des Verschliessers erfolgen. D.h. der Verschliesser umfasst die Deckelabstapelung, welche die Deckel von einem Deckelstapel vereinzelt, wonach die Deckel dann zum Behälter geführt werden. Dabei werden die Deckel beim Vereinzeln gezählt.

Durch die Deckelabstapelung weiss der Verschliesser also insbesondere exakt, wie viele Behälter verschlossen wurden. Wird der Verschliesser nach einem Produktionslauf gestoppt, können die Zähler der einzelnen Falzmittel (bevorzugt Falzrollen) unter Berücksichtigung einer Gesamtanzahl von Falzmitteln / einer Anzahl Verschliessstationen des Verschliesser, um die entsprechende Anzahl von Behältern erhöht werden. Zum Beispiel: Weist der Verschliesser 14 Verschliessstationen auf und es wurden 1.4 Millionen Behälter in einem Produktionslauf verschlossen, werden jeder Falzrolle 100'000 verschlossene Behälter zugeordnet.

Prinzipiell kann die Identifikation der Falzwerkzeuge beim Start des Verschliessers durchgeführt werden, um zu überprüfen, ob neue Falzwerkzeuge eingesetzt wurden. Bei kurzen Stopps unter 10 Minuten, die z.B. durch einen Fehler verursacht wurden, wird vorzugsweise beim erneuten Start keine neue Identifikation durchgeführt.

Wird das Falzwerkzeug wie die Falzrolle ersetzt, kann die Steuervorrichtung dies vorzugsweise in einem Logfile vermerken. Automatisch wird für jedes ersetztes Falzwerkzeug / ersetzte Falzrolle ein neuer Zähler gestartet. Die Daten des alten Falzwerkzeuges / der alten Falzrolle bleiben vorzugsweise in der Steuerung erhalten. Wird die ersetzte Falzrolle noch einmal eingesetzt, bemerkt dies die Steuervorrichtung und ordnet dieser Falzrolle erneut die verschlossenen Behälter zu, d.h. der Zähler wird fortgesetzt.

Durch das erfindungsgemässe Verfahren können insbesondere auch verlässliche Angaben zur Standzeit der Falzwerkzeuge erhalten werden. Dabei können die Daten analysiert werden, um die Anzahl der verschliessbaren Behälter zu aktualisieren und insbesondere auch in einer Cloud gespeichert und an Steuervorrichtungen verteilt werden.

Erfindungsgemäss wird weiter ein Verschliesser zum Verschliesser der Behälter mit dem Deckel vorgeschlagen, welcher zur Durchführung des erfindungsgemässen Verfahrens verwendet wird.

Der Verschliesser kann ein Falzwerkzeug zum Befestigen des Deckels an dem Behälter sowie die Steuervorrichtung zur Steuerung und Überwachung des Verschliessers umfassen, wobei das Falzwerkzeug das Identifikationselement umfasst, durch welches Identifikationselement das Falzwerkzeug eindeutig identifizierbar ist. Ausserdem kann der Verschliesser die in dem Arbeitsraum des Verschliessers angeordnete (karussellförmige) Anordnung mit einer Vielzahl von das Falzwerkzeug umfassenden Verschliessstationen umfassen.

Zum Zuführen der Behälter zu der Anordnung kann eine Zufuhreinrichtung an der Anordnung angeordnet sein. Ausserdem kann der Verschliesser einen Auslauf für (mit dem Deckel) verschlossene Behälter von der Anordnung umfassen.

Vorzugsweise umfasst der Verschliesser ausserdem eine Deckelzuführung, die Deckel von der Abstapelung des Deckelstapels bis zur Übergabe auf den Behälter führt. Nach dem Abstapelprozess, bei welchem die Deckel durch die Abstapelung von einem Stapel einzeln getrennt werden, werden die Deckel also zum Behälter geführt. Dabei kann die Deckelzuführung in dem Arbeitsraum des Verschliessers unterhalb der Abstapelung angeordnet sein.

Das Verschliessen des Behälters kann das Positionieren des Behälters auf einer Hubstation der Verschliessstation und das Falzen des Deckels an den Behälter mit der Falzrolle und dem Falzkopf umfassen. Abschliessend kann der verschlossene Behälter aus dem Arbeitsraum des Verschliesser abgeführt werden.

Dabei ist der Arbeitsraum der Raum des Verschliessers, in welchem der Behälter vorzugsweise mit dem Deckel verschlossen wird, insbesondere der Raum, in welchem ein Falzprozess stattfindet. Vorzugsweise wird der Arbeitsraum von einem Gehäuse umgeben und grenzt so den Arbeitsraum des Verschliessers ab (und ermöglicht so das Bilden einer Hygienezone).

Insbesondere kann das Gehäuse eine Verkleidung, Umhüllung, Verschalung als oder Ummantelung angesehen werden, welches den Arbeitsraum zumindest teilweise umgibt. Dabei kann das Gehäuse den Arbeitsraum nach Aussen abschliessen und / oder abschirmen, sodass eine Atmosphäre im Arbeitsraum hygienisch von der Umgebung abgetrennt wird.

Die Verschliessstation kann einen Verschliesskopf zum Verschliessen des Behälters mit dem Deckel umfassen. Dabei kann der Verschliesskopf die Falzmittel zum Falzen des Deckels an den Behälter umfassen. Die Falzmittel können dabei die Falzrolle und der Falzkopf sein. Der beziehungsweise jeder Verschliesskopf kann also mindestens eine Falzrolle (besonders bevorzugt zwei Falzrollen) und einen Falzkopf umfassen. Dabei kann der Verschliesskopf um eine Falzachse rotierbare Falzwelle beziehungsweise Falzrollenbolzen umfassen, wobei an einem Ende der jeweiligen Falzwelle / des jeweiligen Falzrollenbolzens das Falzmittel angeordnet ist (Falzkopf und Falzrolle sind also insbesondere über die jeweilige Falzwelle / den jeweiligen Falzrollenbolzen rotierbar).

Insbesondere können zwei Falzrollen an einem Falzhebel angeordnet sein, jeweils eine Falzrolle für eine erste Falzoperation und eine Falzrolle für eine zweite Falzoperation. Die erste und die zweite Falzrolle können jedoch auch an einem separaten Falzhebel angeordnet sein. Der erfindungsgemässe Verschliesser beziehungsweise die Anordnung kann weiter die Hubstation (beziehungsweise eine Vielzahl von Hubstationen) zum Anheben des Behälters umfassen. Die Hubstationen können dabei in der Anordnung gegenüber der Verschliessköpfe angeordnet sein.

Der erfindungsgemässe Verschliesser ist bevorzugt als ein Dosenverschliesser ausgestaltet. Dabei kann der Behälter eine Dose und der Deckel ein Dosendeckel sein, welche durch den Dosenverschliesser miteinander gefalzt werden. Der Dosenverschliesser weist üblicherweise als Anordnung mehrere karussellförmig angeordnete gleichartige Verschliessstationen (von vorzugsweise Verschliessköpfen und Hubstationen) auf, in denen jeweils eine Dose mit einem Dosendeckel verschlossen wird.

Im Betriebszustand des Dosenverschliessers werden die Falzrollen mit ihrem jeweiligen Falzprofil in Kontakt mit einem Dosendeckelflansch des Dosendeckels und einem Dosenflansch der Dose gebracht. Durch Rotation der Dose wird dann die Falzrolle in Umfangsrichtung der Dose rotiert, wobei der Dosenflansch mit dem Dosendeckelflansch gefalzt wird. Zur Rotation der Dose wird die Dose bevorzugt zwischen dem Falzkopf und der Hubstation eingespannt, wobei der Falzkopf mit der Falzwelle um die Falzachse rotiert wird.

Im Rahmen der Erfindung kann unter der Dose ein rotationssymmetrischer Behälter verstanden werden, welcher mittels des Dosenverschliessers und der zugehörigen Falzrolle verschlossen wird. Eine Dose kann vorzugsweise ein Metall, insbesondere Aluminium oder Stahl umfassen.

Prinzipiell kann der Verschliesser bevorzugt mindestens zwei Arten Falzrollen mit vorzugsweise unterschiedlichen Falzprofilen umfassen (wobei der entsprechende Verschliesskopf Falzrollen beider Arten umfasst), sodass Dosen nach einem Doppelfalzprinzip verschlossen werden können, bei welchem die Dosen in der Regel in zwei Stufen verschlossen werden. Je eine Art Falzrolle ist dabei für eine Stufe zuständig. Die erste Art Falzrolle fertigt einen Vorfalz (erste Falzoperation) an, während die zweite Art Falzrolle die Dose / das Gebinde komplett verschliesst (zweite Falzoperation).

Wenn die Dose in der Verschliessstation zwischen Hubstation und Falzkopf eingespannt ist, erfolgt die erste Falzoperation mit der ersten Falzrolle der Verschliessstation, jedoch die zweite Operation vorzugsweise mit der zweiten Falzrolle einer anderen (benachbarten) Verschliessstation. Also können beim Verschliessen einer Dose immer die Falzrollen von zwei Verschliessstationen beteiligt sein.

Im Folgenden werden die Erfindung und der Stand der Technik anhand von Ausführungsbeispielen unter Bezugnahme auf die Zeichnungen näher erläutert.
- Fig. 1: eine Draufsicht eines Dosenverschliessers;
- Fig. 2: eine Seitenansicht einer Verschliessstation.

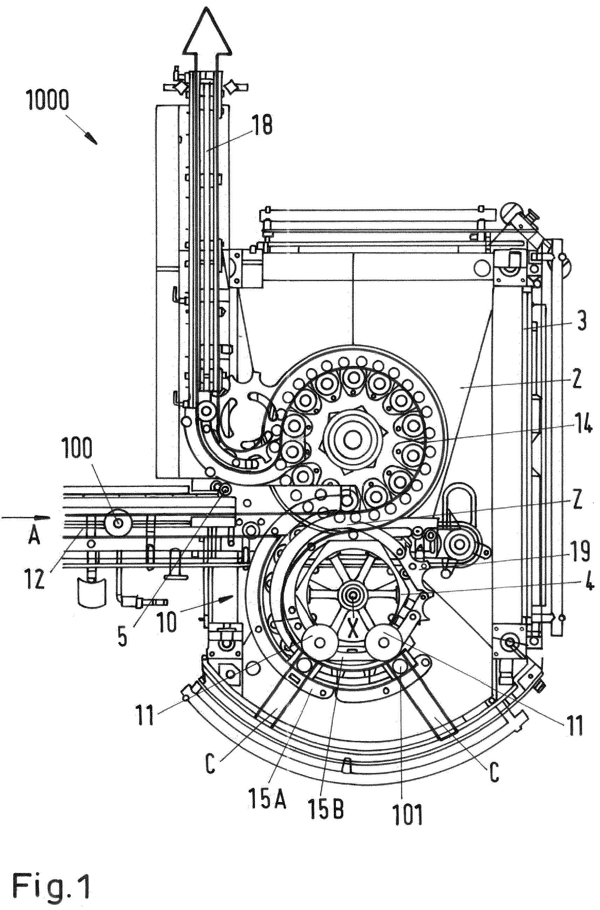

Fig. 1 zeigt eine Draufsicht eines erfindungsgemässen Dosenverschliessers 1000.

Der Dosenverschliesser 1000 gemäss Fig. 1 umfasst zwei Deckelbereitstellungsvorrichtungen 11 zur Bereitstellung eines Deckels 101 an eine Deckelzuführung 10, welche die Deckel 101 zur Dose 100 transportiert.

Dabei umfasst die Deckelzuführung 10 eine Deckelbewegungsvorrichtung 4, welche derart beweglich angeordnet ist, dass der Deckel 101 durch die Deckelbewegungsvorrichtung 4 zur Dose 100 bewegt werden kann. Dafür ist die Deckelbewegungsvorrichtung 4 an einer Welle befestigt und durch diese Welle rotierbar angeordnet, sodass der Deckel 101 durch eine Rotation der Deckelbewegungsvorrichtung 4 bewegbar ist.

Ausserdem umfasst die Deckelzuführung 10 eine an der Deckelbewegungsvorrichtung 4 angeordnete Deckelführung 15A, 15B zum Führen des Deckels 101 zu der Dose 100. Dafür hat die Deckelführung 15A, 15B eine erste Schiene 15A und eine zur ersten Schiene 15A parallel verlaufende zweite Schiene 15B, wobei der Deckel 101 derart zwischen den Schienen 15A, 15B angeordnet wird, dass der Deckel 101 durch die Bewegung eines Deckelmitnehmers 19 der Deckelbewegungsvorrichtung 4 zwischen den Schienen 15A, 15B in Richtung Punkt Z geführt wird, wo der Deckel 101 mit der entlang A von einer Behälterzuführung 12 einlaufenden Dose 100 vereint wird.

Zudem umfasst der Verschliesser 1000 einen Falzprozess / Anordnung 14 mit Verschliessstationen in Form von Falzstationen zum Verschliessen der Dose 100 mit dem Deckel 101. Dabei ist der Falzprozess 14 in einem von einem Gehäuse 3 umgebenen Arbeitsraum 2 des Dosenverschliessers 1000 angeordnet.

Der Deckel 101 wird dabei entlang C durch die Deckelbereitstellungsvorrichtung 11 in den Arbeitsraum 2 des Dosenverschliesser 1000 eingebracht und von der Deckelführung 15A, 15B zur Dose 100 geführt.

Bevor die Deckel jedoch auf die Deckelführung 15A, 15B aufgelegt werden, findet ein Abstapelprozess statt, bei welchem die Deckel 101 von einem Stapel einzeln getrennt werden.

Dann werden die Dosen 100 mit Deckel 101 zum Falzprozess 14 geführt. Beim Zuführen zum Falzprozess 14 werden die Dose 100 und der Deckel 101 mit einer stationär an der Deckelzuführung 10 und der Behälterzuführung 12 angeordneten Begasungsvorrichtung 5 begast. Danach wird die Dose 100 mit dem Deckel 101 eingespannt und durch den Falzprozess 14 verschlossen. Die verschlossene Dose wird durch einen weiteren Rotor in einen Dosenausgang 18 gefördert.

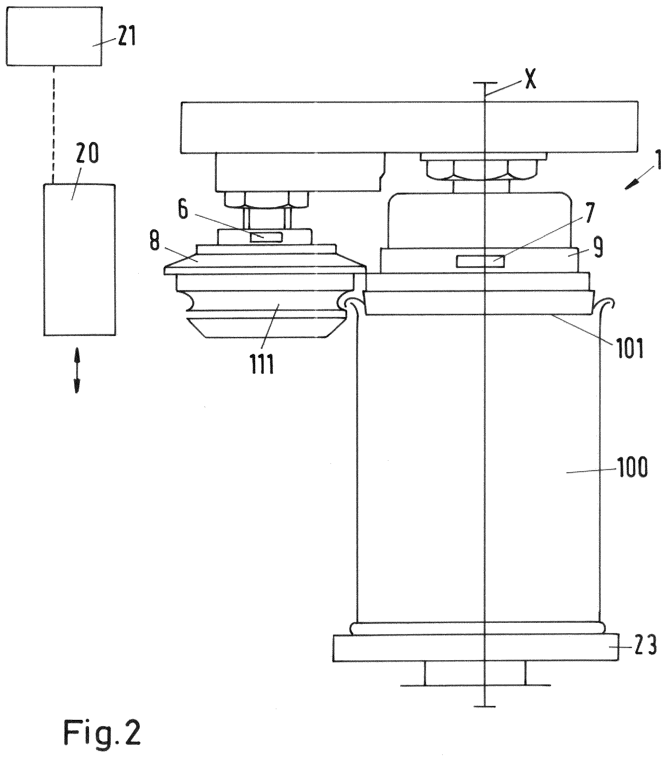

Fig. 2 zeigt eine schematische Darstellung einer Verschliessstation 1 mit der zu verschliessenden Dose 100 und dem Dosendeckel 101, bei welcher die erfindungsgemässe Steuervorrichtung 21 mit einem Identifikationsgerät 20 verbunden ist.

Die Verschliessstation 1 umfasst eine Dosenstütze mit Hubstation 23, einen Falzkopf 9 und eine um eine Falzwelle drehbar gelagerte Falzrolle 8 mit einem Falzrollenprofil 111. Über der Öffnung der Dose 100 ist der Dosendeckel 101 zentriert angeordnet. Die Dose 100 weist im Bereich der Dosenöffnung einen umlaufenden Dosenflansch und der Dosendeckel 101 einen umlaufenden Dosendeckelflansch auf.

Während des Verschliessvorgangs wird die Falzrolle 8 über das Falzrollenprofil 111 in Kontakt mit dem Dosenflansch und dem Dosendeckelflansch gebracht. Hierbei werden der Dosenflansch und der Dosendeckelflansch mittels einer im Wesentlichen radial wirkenden Kraft über die Falzrolle 8 miteinander verpresst. Die Verpressung erfolgt dabei durch ein kontinuierliches Abrollen der Falzrolle 8 in Umfangsrichtung entlang dem Umfang der Dosenöffnung.

Zum Falzen wird die Dose 100 dabei durch eine Einspannvorrichtung aus Hubstation 23 und Falzkopf 9 rotiert, indem der Falzkopf 9 mit der Falzwelle um die Falzachse X rotiert wird.

Mittels der Steuervorrichtung 1 kann eine Überwachung der Falzrolle 8 und / oder des Falzkopfes 9 durchgeführt werden.

Hierfür umfasst die Falzrolle 8 ein erstes Identifikationselement 6 und der Falzkopf 9 ein zweites Identifikationselement 7, durch welche die Falzrolle 8 und der Falzkopf 9 (gegenüber von Falzrollen / Falzköpfen anderer Verschliessstation) eindeutig identifiziert werden können.

Dabei werden die Falzrolle 8 und der Falzkopf 9 durch das Identifikationsgerät 20 identifiziert, welches sich zu den Identifikationselementen 6, 7 bewegt. Dafür sind die Identifikationselemente 6, 7 als Transponder ausgestaltet, welche ausgelesen werden.

Nach dem Auslesen wird die Identifikation der Falzrolle 8 und des Falzkopfes 9 in der Steuervorrichtung 21 hinterlegt. Anschliessend kann eine Anzahl der von mittels Falzrolle 8 und Falzkopf 9 verschlossenen Dosen überwacht werden.

Hierfür wird für die Falzrolle 8 und den Falzkopf 9 jeweils ein Zähler in der Steuervorrichtung 21 hinterlegt.

Durch ein Zählen der Dosendeckel 101 durch die Deckelabstapelung des Verschliessers kann der hinterlegte Zähler erhöht werden, da durch die Deckelabstapelung die Anzahl der Dosendeckel 101 und somit die Anzahl der verschlossenen Dosen ermittelt werden kann. Wird der Verschliesser nach einem Produktionslauf gestoppt, werden die Zähler der Falzrolle 8 und des Falzkopfes 9 unter Berücksichtigung der Anzahl Verschliessstationen 1, um die entsprechende Anzahl von Dosen erhöht.

Die Erfindung ist nicht auf die offenbarten Ausführungsformen beschränkt. Andere Variationen der offenbarten Ausführungsformen können von Fachleuten beim Praktizieren einer beanspruchten Erfindung aus einem Studium der Zeichnungen, der Offenbarung und der abhängigen Ansprüche verstanden und bewirkt werden. In den Ansprüchen schliesst das Wort "umfassend" keine anderen Elemente oder Schritte aus, und der unbestimmte Artikel "ein" oder "eine" schliesst keine Vielzahl aus. Die blosse Tatsache, dass bestimmte Massnahmen in voneinander verschiedenen abhängigen Ansprüchen wiederholt werden, bedeutet nicht, dass eine Kombination dieser Massnahmen nicht vorteilhaft verwendet werden kann. Jegliche Bezugszeichen in den Ansprüchen sollten nicht als Einschränkung des Umfangs ausgelegt werden.

## Patentansprüche

1. Verfahren zur Überwachung von Falzwerkzeugen (8, 9) eines Verschliessers (1000), wobei das Verfahren umfasst
das Bereitstellen des Verschliessers (1000) mit einem Falzwerkzeug (8, 9) zum Befestigen eines Deckels (101) an einem Behälter (100) sowie mit einer Steuervorrichtung (21) zur Steuerung und Überwachung des Verschliessers (1000), wobei das Falzwerkzeug (8, 9) ein Identifikationselement (6, 7) umfasst, durch welches das Falzwerkzeug (8, 9) eindeutig identifizierbar ist;
Identifizieren des Falzwerkzeuges (8, 9) mittels des Identifikationselementes (6, 7) und Hinterlegen der Identifikation des Falzwerkzeuges (8, 9) in der Steuervorrichtung (21);
Überwachen einer Anzahl von mittels des Falzwerkzeuges (8, 9) verschlossenen Behältern durch die in der Steuervorrichtung (21) hinterlegte Identifikation, **dadurch gekennzeichnet, dass**
der Verschliesser (1000) ein Identifikationsgerät (20) umfasst, welches zu dem Identifikationselement (6, 7) bewegt wird und das Falzwerkzeug (8, 9) mittels des Identifikationselements (6, 7) identifiziert.

2. Verfahren nach Anspruch 1, wobei das Identifikationselement (6, 7) ein Transponder ist.

3. Verfahren nach Anspruch 2, wobei der Transponder ein passiver Transponder ist und das Identifikationsgerät (20) als eine Sende-/Empfangseinheit ausgestaltet ist und zur Identifikation Energie an den passiven Transponder bereitstellt.

4. Verfahren nach Anspruch 1, wobei das Identifikationselement (6, 7) ein optoelektronisch lesbares Identifikationselement ist.

5. Verfahren nach Anspruch 4, wobei das Identifikationsgerät (20) ein optoelektronisches Lesegerät ist und zur Identifikation das optoelektronisch lesbares Identifikationselement ausliest.

6. Verfahren nach Anspruch 5, wobei das optoelektronisch lesbares Identifikationselement ein Strichcode oder ein QR-Code ist.

7. Verfahren nach einem der vorangehenden Ansprüche, wobei in der Steuervorrichtung (21) ein Grenzwert für verschlossene Behälter hinterlegt ist und nach dem Erreichen des Grenzwertes für das Falzwerkzeug (8, 9) ein Abnutzungssignal über die Steuervorrichtung (21) ausgegeben wird.

8. Verfahren nach einem der vorangehenden Ansprüche, wobei das Falzwerkzeug (8, 9) eine um eine Falzachse (X) rotierbare Falzwelle und ein an einem Ende der Falzwelle angeordnetes Falzmittel (8, 9) umfasst.

9. Verfahren nach Anspruch 8, wobei das Überwachen der Anzahl von mittels des Falzwerkzeuges (8, 9) verschlossenen Behältern durch eine Rotationsmessung an der Falzwelle oder über ein Zählen der Deckel (101) durch eine Deckelabstapelung des Verschliessers (1000) erfolgt.

10. Verfahren nach einem der Ansprüche 8 oder 9, wobei die Falzwelle eine Falzkopfwelle und das Falzmittel (8, 9) ein Falzkopf (9) zum Fixieren des Deckels (101) auf dem Behälter (100) ist.

11. Verfahren nach einem der Ansprüche 9 bis 11, wobei die Falzwelle eine Falzrollenwelle und das Falzmittel (8, 9) eine Falzrolle (8) zum Falzen des Deckels (101) an den Behälter (100) ist.

12. Verschliesser mit einer Steuervorrichtung (21) zur Steuerung und Überwachung des Verschliessers (1000) zur Durchführung eines Verfahrens nach einem der vorangehenden Ansprüche.

13. Verschliesser nach Anspruch 12 umfassend ein Falzwerkzeug (8, 9) zum Befestigen eines Deckels (101) an einem Behälter (100), wobei das Falzwerkzeug (8, 9) ein Identifikationselement (6, 7) umfasst, durch welches Identifikationselement (6, 7) das Falzwerkzeug (8, 9) eindeutig identifizierbar ist.

14. Verschliesser nach Anspruch 13 umfassend ein in einem Arbeitsraum (2) des Verschliessers (1000) angeordnete Anordnung (14) mit einer Vielzahl von das Falzwerkzeug (8, 9) umfassenden Verschliessstationen (1).

## Claims

1. A method for monitoring seaming tools (8, 9) of a sealer (1000), wherein the method comprises
the provision of the sealer (1000) with a seaming tool (8, 9) for attaching a lid (101) to a container (100) and a control device (21) for controlling and monitoring the sealer (1000), wherein the seaming tool (8, 9) comprises an identification element (6, 7) by means of which the seaming tool (8, 9) can be uniquely identified;
identifying the seaming tool (8, 9) by means of the identification element (6, 7) and storing the identification of the seaming tool (8, 9) in the control device (21);
monitoring a number of containers sealed by means of the seaming tool (8, 9) by means of the identification stored in the control device (21),
**characterized in that** the sealer (1000) comprises an identification device (20) which is moved to the identification element (6, 7) and identifies the seaming tool (8, 9) by means of the identification element (6, 7).

2. The method according to claim 1, wherein the identification element (6, 7) is a transponder.

3. The method according to claim 2, wherein the transponder is a passive transponder, and the identification device (20) is designed as a transmitting/receiving unit and provides energy to the passive transponder for identification.

4. The method according to claim 1, wherein the identification element (6, 7) is an opto-electronically readable identification element.

5. The method according to claim 4, wherein the identification device (20) is an opto-electronic reading device and reads the opto-electronically readable identification element for identification.

6. The method according to claim 5, wherein the opto-electronically readable identification element is a bar code or a QR code.

7. The method according to any one of the preceding claims, wherein a limit value for sealed containers is stored in the control device (21) and a wear signal is output via the control device (21) after the limit value for the seaming tool (8, 9) is reached.

8. The method according to any one of the preceding claims, wherein the seaming tool (8, 9) comprises a seaming shaft rotatable about a seaming axis (X) and a seaming means (8, 9) arranged at one end of the seaming shaft.

9. The method according to claim 8, wherein the monitoring the number of containers sealed by means of the seaming tool (8, 9) is carried out by a rotation measurement at the seaming shaft or via a counting of the lids (101) by a lid de-stacking device of the sealer (1000).

10. The method according to any one of the claims 8 or 9, wherein the seaming shaft is a seaming head shaft, and the seaming means (8, 9) is a seaming head (9) for fixing the lid (101) on the container (100).

11. The method according to any one of the claims 9 to 11, wherein the seaming shaft is a seaming roller shaft, and the seaming means (8, 9) is a seaming roller (8) for seaming the lid (101) to the container (100).

12. A sealer with a control device (21) for controlling and monitoring the sealer (1000) for carrying out a method according to any of the preceding claims.

13. The sealer according to claim 12, comprising a seaming tool (8, 9) for attaching a lid (101) to a container (100), wherein the seaming tool (8, 9) comprises an identification element (6, 7), by which identification element (6, 7) the seaming tool (8, 9) can be uniquely identified.

14. The sealer according to claim 13, comprising an arrangement (14) arranged in a working space (2) of the sealer (1000) with a plurality of sealing stations (1) comprising the seaming tool (8, 9).

## Revendications

1. Procédé de surveillance d'outils de pliage (8, 9) d'une machine de fermeture (1000), le procédé comprenant
la mise à disposition de la machine de fermeture (1000) avec un outil de pliage (8, 9) pour la fixation d'un couvercle (101) sur un récipient (100) ainsi qu'avec un dispositif de commande (21) pour la commande et la surveillance de la machine de fermeture (1000), l'outil de pliage (8, 9) comprenant un élément d'identification (6, 7) par lequel l'outil de pliage (8, 9) peut être identifié de manière univoque ;
l'identification de l'outil de pliage (8, 9) au moyen de l'élément d'identification (6, 7) et le stockage de l'identification de l'outil de pliage (8, 9) dans le dispositif de commande (21) ;
la surveillance d'un nombre de récipients fermés au moyen de l'outil de pliage (8, 9) par l'identification stockée dans le dispositif de commande (21), **caractérisé en ce que**
la machine de fermeture (1000) comprend un appareil d'identification (20) qui est déplacé vers l'élément d'identification (6, 7) et identifie l'outil de pliage (8, 9) au moyen de l'élément d'identification (6, 7).

2. Procédé selon la revendication 1, dans lequel l'élément d'identification (6, 7) est un transpondeur.

3. Procédé selon la revendication 2, dans lequel le transpondeur est un transpondeur passif et l'appareil d'identification (20) est conçu comme une unité d'émission/réception et fournit de l'énergie au transpondeur passif pour l'identification.

4. Procédé selon la revendication 1, dans lequel l'élément d'identification (6, 7) est un élément d'identification lisible opto-électroniquement.

5. Procédé selon la revendication 4, dans lequel l'appareil d'identification (20) est un appareil de lecture opto-électronique et lit l'élément d'identification lisible opto-électroniquement pour l'identification.

6. Procédé selon la revendication 5, dans lequel l'élément d'identification lisible opto-électroniquement est un code à barres ou un code QR.

7. Procédé selon l'une quelconque des revendications précédentes, dans lequel une valeur limite pour des récipients fermés est stockée dans le dispositif de commande (21) et un signal d'usure est émis par le biais du dispositif de commande (21) après que la valeur limite pour l'outil de pliage (8, 9) a été atteinte.

8. Procédé selon l'une quelconque des revendications précédentes, dans lequel l'outil de pliage (8, 9) comprend un arbre de pliage pouvant tourner autour d'un axe de pliage (X) et un moyen de pliage (8, 9) disposé à une extrémité de l'arbre de pliage.

9. Procédé selon la revendication 8, dans lequel la surveillance du nombre de récipients fermés au moyen de l'outil de pliage (8, 9) est effectuée par une mesure de rotation sur l'arbre de pliage ou par un comptage des couvercles (101) par un empilement de couvercles de la machine de fermeture (1000).

10. Procédé selon l'une quelconque des revendications 8 ou 9, dans lequel l'arbre de pliage est un arbre de tête de pliage et le moyen de pliage (8, 9) est une tête de pliage (9) pour la fixation du couvercle (101) sur le récipient (100).

11. Procédé selon l'une quelconque des revendications 9 à 11, dans lequel l'arbre de pliage est un arbre de rouleau de pliage et le moyen de pliage (8, 9) est un rouleau de pliage (8) pour le pliage du couvercle (101) sur le récipient (100).

12. Machine de fermeture avec un dispositif de commande (21) pour la commande et la surveillance de la machine de fermeture (1000) pour la réalisation d'un procédé selon l'une quelconque des revendications précédentes.

13. Machine de fermeture selon la revendication 12, comprenant un outil de pliage (8, 9) pour la fixation d'un couvercle (101) sur un récipient (100), l'outil de pliage (8, 9) comprenant un élément d'identification (6, 7), par lequel élément d'identification (6, 7) l'outil de pliage (8, 9) peut être identifié de manière univoque.

14. Machine de fermeture selon la revendication 13, comprenant un agencement (14) disposé dans un espace de travail (2) de la machine de fermeture (1000) avec une pluralité de postes de fermeture (1) comprenant l'outil de pliage (8, 9).
